# FASCICULE DE BREVET EUROPEEN

(11) **EP 1 141 106 B1**
(45) Date de publication et mention de la délivrance du brevet: **09.07.2003**
(21) Numéro de dépôt: 99949046.9
(22) Date de dépôt: 13.10.1999
(51) Int. Cl.: C08K 3/22, C08K 3/26, C08L 21/00

(54) **UTILISATION D'HYDROXYCARBONATE, D'HYDROXYOXYCARBONATE OU D'OXYCARBONATE D'ALUMINIUM COMME CHARGE DANS UNE COMPOSITION DE CAOUTCHOUC**
VERWENDUNG VON ALUMINIUMHYDROXYCARBONAT, ALUMINIUMHYDROXYOXYCARBONAT ODER ALUMINIUMOXYCARBONAT ALS FÜLLSTOFF IN KAUTSCHUKZUSAMMENSETZUNGEN
USE OF ALUMINIUM HYDROXYCARBONATE, HYDROXYOXYCARBONATE OR OXYCARBONATE AS FILLER IN A RUBBER COMPOSITION

(30) Priorité: 13.10.1998 FR 9813175
(43) Date de publication de la demande: 10.10.2001
(73) Titulaire: RHODIA CHIMIE, 92512 Boulogne Billancourt Cedex (FR)
(72) Inventeur: LADOUCE, Laurence, F-59800 Lille (FR); CHOPIN, Thierry, F-95320 Saint-Leu-la-Forêt (FR); LE GOFF, Pierre-Yves, F-75020 Paris (FR); MARTIN, Michel, F-69006 Lyon (FR)
(74) Mandataire: Delenne, Marc
(86) Numéro de dépôt international: FR9902483
(87) Numéro de publication internationale: WO00022034

(56) Documents cités:
- EP-A- 0 097 330
- EP-A- 0 807 603
- EP-A- 0 810 258
- US-A- 4 492 682

## Description

La présente invention est relative à l'utilisation comme charge, dans des compositions de caoutchouc, d'hydroxycarbonate, d'hydroxyoxycarbonate ou d'oxycarbonate d'aluminium amorphe.

Elle est également relative aux compositions de caoutchouc ainsi obtenues.

Enfin, elle concerne en outre les articles finis à base de ces compositions, et notamment les enveloppes de pneumatique.

Il est connu d'employer des charges blanches renforçantes dans les élastomères, comme par exemple de la silice précipitée ou de l'alumine. Mais les résultats ne sont pas toujours ceux espérés.

Le but de l'invention est de proposer une charge pour les compositions de caoutchouc leur procurant un compromis de propriétés très satisfaisant, à savoir de préférence :
- de très bonnes propriétés rhéologiques et une excellente aptitude à la vulcanisation, comparables à celles de silices précipitées très dispersibles, mais bien supérieures à celles procurées par l'alumine,
- des propriétés dynamiques particulièrement remarquables, en particulier un effet Payne de faible amplitude, d'où une faible résistance au roulement pour les pneumatiques à base de ces compositions, et/ou une tangente δ à 0 °C très étevée, d'où une adhérence améliorée pour les pneumatiques à base de ces compositions,
- un bon renforcement en terme de module,
- une résistance plutôt élévée au vieillissement thermique et au vieillissement UV (rayonnements ultraviolets).

Dans ce but, la présente invention a pour objet l'utilisation comme charge, dans une composition de caoutchouc, d'au moins un composé (A) consistant en un hydroxycarbonate d'aluminium amorphe ou un hydroxyoxycarbonate d'aluminium amorphe ou un oxycarbonate d'aluminium amorphe.

Plus particulièrement, ledit hydroxycarbonate, hydroxyoxycarbonate ou oxycarbonate contient au moins 0,01, notamment au moins 0,04, mole de carbonate par mole d'aluminium ; il peut contenir au moins 0,1 mole de carbonate par mole d'aluminium. En général, son rapport molaire carbonate/aluminium est d'au plus 0,25, en particulier d'au plus 0,2.

Les carbonates présents dans l'hydroxycarbonate, l'hydroxyoxycarbonate ou l'oxycarbonate, et qui peuvent être détectés par spectroscopie infrarouge, sont habituellement covalents.

Le composé (A) possède, généralement, une surface spécifique BET comprise entre 40 et 150 m²/g, notamment entre 45 et 95 m²/g ; elle peut être comprise entre 50 et 75 m²/g. La surface BET est déterminée selon la méthode de BRUNAUER - EMMET - TELLER décrite dans "The Journal of the American Sodety", Vol. 60, page 309, février 1938 et correspondant à la norme NFT 45007 (novemebre 1987).

Ce composé (A) présente préférentiellement une proportion faible de fonctions réactives AI-OH de surface.

Quelques variantes préférées mais non limitatives de l'invention sont décrites ci-dessous.

Selon une première variante de l'invention, le composé (A) employé est un hydroxycarbonate d'aluminium amorphe répondant à la formule brute (I) suivante

Al(OH)ₓ(CO₃)_{y}, zH₂O (I)

dans laquelle
0,5 ≤ x ≤ 3, par exemple 1 ≤ x ≤ 3
0,01 ≤ y ≤ 0,25, par exemple 0,04 ≤ y ≤ 0,25, notamment 0,1 ≤ y ≤ 0,25
z ≤ 1,5, par exemple z ≤ 1

Dans cette formule (I), y peut être au plus égal à 0,2.

Notamment dans le cadre de cette variante de l'invention, le composé (A) possède de préférence la propriété suivante : il reste amorphe (son spectre de diffraction aux rayons X reste plat) après avoir été calciné (sous air) pendant 2 heures à n'importe quelle température comprise entre 150 et 700 °C ou après avoir subi un traitement consistant en une déshydratation rapide à l'aide d'un courant de gaz à 600 °C, le temps de contact du composé avec ce gaz étant de 1 à 2 secondes.

Dans cette variante de l'invention, le composé (A) est en général formé d'agrégats de particules élémentaires peu ou non poreuses, par exemple sensiblement sphériques, de taille pouvant être comprise entre 15 et 25 nm.

Selon une deuxième variante de l'invention, le composé (A) employé est issu de la calcination (sous air notamment) à n'importe quelle température comprise entre 150 et 700 °C, notamment entre 180 et 650 °C, d'un hydroxycarbonate d'aluminium amorphe (appelé hydroxycarbonate d'aluminium amorphe de départ), en particulier pendant 1 à 3 heures, par exemple pendant 2 heures.

Dans cette variante, l'hydroxycarbonate d'aluminium amorphe de départ possède de préférence la propriété suivante : il reste amorphe après avoir subi un traitement consistant en une déshydratation rapide à l'aide d'un courant de gaz à 600 °C, le temps de contact du composé avec ce gaz étant de 1 à 2 secondes.

Selon une troisième variante de l'invention, le composé (A) employé est issu de la déshydratation rapide d'un hydroxycarbonate d'aluminium amorphe (appelé hydroxycarbonate d'aluminium amorphe de départ) à l'aide d'un courant de gaz à une température comprise entre 500 et 700 °C, en particulier égale à 600 °C, le temps de contact de cet hydroxycarbonate d'aluminium amorphe de départ avec ce gaz étant compris entre une fraction de seconde et 4 secondes, notamment entre 1 et 2 secondes.

Dans cette variante, l'hydroxycarbonate d'aluminium amorphe de départ possède de préférence la propriété suivante : il reste amorphe après avoir été calciné (sous air) pendant 2 heures à n'importe quelle température comprise entre 150 et 700 °C.

Notamment dans les deuxième et troisième variantes de l'invention, le composé (A) employé présente avantageusement une dispersibilité élevée. Cette dispersibilité est quantifiée à l'aide de la mesure du taux de fines (τ_{f}), c'est-à-dire de la proportion (en poids) de particules de taille inférieure à 0,3 µm, après désagglomération aux ultra-sons, effectuée selon le test décrit ci-après.

Dans ce test, on mesure l'aptitude à la dispersion du composé par une mesure granulométrique (par sédimentation), effectuée sur une suspension du composé préalablement désagglomérée par ultra-sonification. La désagglomération (ou dispersion) sous ultra-sons est mise en oeuvre à l'aide d'un sonificateur BRANSON OSI (450 W), équipé d'une sonde de diamètre 12 mm. La mesure granulométrique est effectuée à l'aide d'un granulomètre SEDIGRAPH (sédimentation dans le champ de gravité + balayage par faisceau de rayons X).

On pèse dans un pilulier (de volume égal à 75 ml) 4 grammes de composé (A) et l'on complète à 50 grammes par ajout d'une solution à 1 g/l d'hexamétaphosphate de sodium : on réalise ainsi une suspension aqueuse à 8 % de composé (A) qui est homogénéisée pendant 2 minutes par agitation magnétique. On procède ensuite à la désagglomération (dispersion) sous ultra-sons comme suit : la sonde étant immergée sur une longueur de 4 cm, on règle la puissance de sortie de manière à obtenir une déviation de l'aiguille de puissance indiquant 20 %. La désaggtomération est effectuée pendant 180 secondes.

On réalise ensuite la mesure granulométrique au moyen d'un granulomètre SEDIGRAPH. Pour cela, on règle tout d'abord la vitesse de balayage vertical de la cellule par le faisceau de rayons X à 946, ce qui correspond à une taille maximale analysée de 63 µm. On fait circuler de l'eau permutée dans ladite cellule, puis on règle le zéro électrique et le zéro mécanique de l'enregistreur papier (ce réglage se faisant avec le potentiomètre "100 %" de l'enregistreur à la sensibilité maximale). Le crayon de l'enregistreur papier est placé au point représentant la taille de départ de 85 µm. On fait ensuite circuler la suspension de composé (A) désaggloméré, éventuellement refroidie au préalable, dans la cellule du granulomètre SEDIGRAPH (l'analyse granulométrique s'effectuant à 30 °C) et l'analyse démarre alors. L'analyse s'arrête automatiquement dès que la taille de 0,3 µm est atteinte (environ 45 minutes). On calcule alors le taux de fines (τ_{f}), c'est-à-dire la proportion (en poids) de particules de taille inférieure à 0,3 µm.

Ce taux de fines (τ_{f}), ou taux de particules de taille inférieure à 0,3 µm, est d'autant plus élevé que le composé présente une dispersibilité élevée.

Notamment dans les deuxième et troisième variantes de l'invention, le composé (A) employé présente un taux de fines (τ_{f}) d'au moins 80 %, en particulier d'au moins 90 %, voire d'au moins 95 %.

Dans les deuxième et troisième variantes de l'invention, l'hydroxycarbonate d'aluminium amorphe de départ contient de préférence au moins 0,01, notamment au moins 0,04, mole de carbonate par mole d'aluminium ; il peut contenir au moins 0,1 mole de carbonate par mole d'aluminium. En général, son rapport molaire carbonate/aluminium est d'au plus 0,25, en particulier d'au plus 0,2.

Les carbonates présents dans cet hydroxycarbonate d'aluminium amorphe de départ, et qui peuvent être détectés par spectroscopie infrarouge, sont habituellement covalents.

Cet hydroxycarbonate d'aluminium amorphe de départ possède, généralement, une surface spécifique BET comprise entre 40 et 150 m²/g, notamment entre 45 et 95 m²/g ; elle peut être comprise entre 50 et 75 m²/g.

Il est en général formé d'agrégats de particules élémentaires peu ou non poreuses, par exemple sensiblement sphériques, de taille pouvant être comprise entre 15 et 25 nm.

Il possède préférentiellement une proportion faible de fonctions réactives AI-OH de surface.

De même, l'hydroxycarbonate d'aluminium amorphe de départ répond de préférence à la formule brute (I) suivante

Al(OH)ₓ(CO₃)_{y}, zH₂O (I)

dans laquelle
0,5 ≤ x ≤ 3, par exemple 1 ≤ x ≤ 3
0,01 ≤ y ≤ 0,25, par exemple 0,04 ≤ y ≤ 0,25, notamment 0,1 ≤ y ≤ 0,25
z ≤ 1,5, par exemple z ≤ 1

Dans cette formule (I), y peut être au plus égale à 0,2.

Dans les deuxième et troisième variantes de l'invention, l'hydroxycarbonate d'aluminium amorphe de départ, en particulier lorsqu'il répond à la formule brute (I) mentionnée précédemment peut être préparé par le procédé suivant.

On effectue une réaction de précipitation par introduction d'un mélange gazeux, renfermant du gaz carbonique (CO₂), dans une suspension d'aluminate de métal alcalin, en particulier d'aluminate de sodium, contenue dans une enceinte réactionnelle.

Notamment, cette suspension d'aluminate de sodium peut présenter une concentration, exprimée en Al₂O₃, comprise entre 10 et 150 g/l, en particulier entre 20 et 100 g/l ; cette concentration est par exemple comprise entre 40 et 70 g/l.

Elle possède en général un rapport molaire Na₂O/Al₂O₃ compris entre 1 et 2, de préférence entre 1,15 et 1,75.

Son pH peut varier par exemple entre 11 et 13,5, notamment entre 12 et 13.

La température initiale de réaction, c'est-à-dire la température de la suspension d'aluminate au début de l'introduction du mélange gazeux, est habituellement fixée à au plus 15 °C ; elle est comprise par exemple entre 5 et 15 °C.

La réaction est effectuée généralement sous agitation.

Le mélange gazeux qui est introduit dans l'enceinte réactionnelle renferme de préférence, en plus du gaz carbonique, de l'air. Ce mélange gazeux peut alors contenir 20 à 50 %, en particulier 30 à 40 %, en volume de gaz carbonique, et 50 à 80 %, en particulier 60 à 70 %, en volume d'air.

La pression dans l'enceinte réactionnelle est maintenue tout au long de la réaction de préférence entre 1,3 et 3,5 bars, par exemple entre 1,7 et 2,5 bars.

La température finale de réaction doit être en général d'au plus 25 °C ; elle est par exemple comprise entre 10 et 25 °C. Il est préférable de maintenir un refroidissement dans l'enceinte réactionnelle au cours de la carbonatation.

La durée de la réaction (carbonatation) peut être comprise entre 10 et 60 minutes, par exemple entre 10 et 30 minutes.

Le pH du milieu réactionnel en fin de réaction est en général compris entre 9,5 et 10,5.

Le contrôle du pH et de la température permet d'éviter la formation d'une phase parasitaire, la dawsonite.

Ensuite le précipité obtenu est habituellement filtré et, éventuellement, lavé, par exemple avec de l'eau. Même si tout type de moyen de filtration peut être employé, on utilise de manière avantageuse un filtre presse.

Puis le produit obtenu est, éventuellement après remise en suspension (ou repulpage), séché, de préférence par atomisation, notamment à l'aide d'un atomiseur de type APV, avec une température d'entrée comprise par exemple entre 400 et 500 °C et une température de sortie comprise par exemple entre 100 et 135 °C.

L'hydroxycarbonate d'aluminium amorphe obtenu peut subir une opération finale de broyage, au moyen de tout dispositif connu adéquat, afin de "casser" les agglomérats / agrégats.

Les compositions de caoutchouc dans lesquelles est utilisée, à titre de charge (notamment de charge renforçante), l'hydroxycarbonate ou l'oxycarbonate d'aluminium amorphe sont en général à base d'un ou plusieurs élastomères.

Plus particulièrement, parmi les élastomères convenables, on peut citer les élastomères présentant une température de transition vitreuse comprise entre -150 et +20 °C.

A titre d'élastomères possibles, on peut citer, notamment, les élastomères diéniques.

Par exemple, on peut citer le caoutchouc naturel, les polymères ou copolymères dérivant de monomères aliphatiques ou aromatiques, comprenant au moins une insaturation (tels que, notamment, l'éthylène, le propylène, le butadiène, l'isoprène, le styrène), le polyacrylate de butyle, ou leurs associations ; on peut également citer les élastomères silicones et les élastomères halogénés.

La charge contenue dans lesdites compositions de caoutchouc est formée au moins en partie, en particulier en majorité en poids, par le composé (A) consistant en un hydroxycarbonate ou hydroxyoxycarbonate ou oxycarbonate d'aluminium amorphe. Un autre composé tel que de la silice précipitée, notamment très dispersible, peut éventuellement être employée à titre de charge, mais généralement minoritairement en poids par rapport au composé (A).

De manière préférée, ces compositions ne contiennent pas de silice précipitée à titre de charge et/ou la charge est formée en totalité du composé (A).

Les compositions de caoutchouc comprennent en général, en outre, au moins un agent de couplage et/ou au moins un agent de recouvrement.

L'invention est également relative aux articles finis à base des compositions de caoutchouc décrites précédemment. On peut citer, à titre d'articles finis, les enveloppes de pneumatique, en particulier les flancs et la bande de roulement de pneumatique, les semelles de chaussure...

Les exemples suivants illustrent l'invention sans toutefois en limiter la portée.

### EXEMPLE 1

On emploie un réacteur ayant un volume de 100 litres, muni d'une double enveloppe et équipé d'un moyen d'agitation approprié pour le transfert gaz/liquide, à savoir une turbine Rushton, et pouvant travailler sous pression (la puissance dissipée requise est d'environ 4 kW/m³).

On introduit dans ce réacteur 17,8 litres d'une solution d'aluminate de sodium, ayant une concentration, exprimée en Al₂O₃ de 290 g/l et un rapport molaire Na₂O/Al₂O₃ de 1,45. Le volume réactionnel est ensuite complété à 100 litres avec de l'eau permutée. Le pH de la suspension obtenue est supérieur à 12.

Cette suspension est refroidie par l'intermédiaire de la double enveloppe ; sa température est ainsi amenée à 10 °C.

On introduit ensuite dans le réacteur, sous la turbine Rushton, un mélange gazeux présentant la composition suivante :
Q (CO₂) 10 Nm³/h
Q (air) 18,6 Nm³/h

La pression dans le réacteur est maintenue à 2 bars.

La réaction (carbonatation) dure environ 15 minutes.

On maintient un refroidissement dans la double enveloppe pendant toute la durée de la réaction. La température finale du mélange réactionnel est d'environ 20 °C.

La fin de la réaction peut être contrôlée notamment à l'aide d'une sonde de pH. Le pH final du mélange réactionnel est de 10.

Le précipité formé est ensuite filtré au moyen d'un filtre presse et lavé à l'aide d'eau permutée, la quantité d'eau de lavage employée étant de l'ordre de 67 l/kg de solide (exprimé en Al₂O₃) sec.

Enfin, le produit obtenu, après repulpage dans de l'eau permutée, est séché par atomisation, au moyen d'un atomiseur APV, avec une température d'entrée de 450 °C et une température de sortie de 125 °C.

Le produit ainsi préparé est un hydroxycarbonate d'aluminium amorphe : son spectre de diffraction des rayons X est plat

Ce produit reste amorphe après avoir été calciné pendant 2 heures sous air à 200 °C, 400 °C et 600 °C ; il reste également amorphe après avoir été soumis à une déshydratation rapide à l'aide d'un courant de gaz à 600 °C, le temps de contact du produit avec ce gaz étant de 1 à 2 secondes.

Les carbonates présents dans ce produit, détectés par spectroscopie infrarouge, sont de nature covalente. Ce produit contient 0,1 mole de carbonate par mole d'aluminium.

Il possède un taux de fines (τ_{f}), après désagglomération aux ultra-sons, de 25 % en poids.

Sa surface spécifique BET est de 90 m²/g.

### EXEMPLE 2

L'hydroxycarbonate d'aluminium préparé dans l'exemple 1 est calciné sous air pendant 2 heures à une température de 200 °C.

Le composé alors obtenu, référencé HCA1, est amorphe.

Les carbonates présents dans ce composé, détectés par spectroscopie infrarouge, sont de nature covalente. Le composé HCA1 contient 0,09 mole de carbonate par mole d'aluminium.

Sa granulométrie (Malvern) est de 5,0 µm.

Il possède un taux de fines (τ_{f}), après désagglomération aux ultra-sons, de 94 % en poids.

Sa surface spécifique BET est de 75 m²/g.

### EXEMPLE 3

L'hydroxyoxycarbonate référencé HCA1, préparé dans l'exemple 2, subit une opération de broyage à l'aide d'un broyeur jet d'air, afin de "casser" les agglomérats / agrégats.

Le composé amorphe obtenu est référence HCA2.

Les carbonates présents dans ce composé, détectés par spectroscopie infrarouge, sont de nature covalente. Le composé HCA2 contient 0,09 mole de carbonate par mole d'aluminium.

Sa granulométrie (Malvern) est de 1,25 µm.

Il possède un taux de fines (τ_{f}), après désagglomération aux ultra-sons, de 94 % en poids.

Sa surface spécifique BET est de 75 m²/g.

### EXEMPLE 4

L'hydroxycarbonate d'aluminium préparé dans l'exemple 1 est calciné sous air pendant 2 heures à une température de 600 °C.

Il subit ensuite une opération de broyage à l'aide d'un broyeur jet d'air, afin de "casser" les agglomérats / agrégats.

Le composé amorphe obtenu est référencé HCA3.

Les carbonates présents dans ce composé, détectés par spectroscopie infrarouge, sont de nature covalente. Le composé HCA3 contient 0,05 mole de carbonate par mole d'aluminium.

Sa granulométrie (Malvern) est de 0,95 µm.

Il possède un taux de fines (τ_{f}), après désagglomération aux ultra-sons, de 95 % en poids.

Sa surface spécifique BET est de 58 m²/g.

### EXEMPLE 5

On prépare les formulations pour caoutchouc industriel suivantes (tableau 1 : compositions en parties, en poids).

**Tableau 1**

| | composition R | composition 1 |
|---|---|---|
| SBR⁽¹⁾ | 100 | 100 |
| charge SiO₂⁽²⁾ | 50 | 0 |
| charge HCA1 | 0 | 70 |
| silane Si69⁽³⁾ | 4 | 4 |
| diphénylguanidine | 1,45 | 1,45 |
| acide stéarique | 2,5 | 2,5 |
| oxyde de zinc | 2,5 | 2,5 |
| anti-oxydant⁽⁴⁾ | 1,45 | 1,45 |
| suifénamide ⁽⁵⁾ | 2 | 2 |
| soufre | 1 | 1 |

| | | |
|---|---|---|
| (1) Copolymère styrène butadiène synthétisé en solution (type Buna VSL 5525-0), contenant 27,3 % d'huile | | |
| (2) Charge formée par une silice précipitée de l'exemple 12 de EP-A-0520862 | | |
| (3) Agent de couplage charge/caoutchouc (commercialisé par la société Dégussa) | | |
| (4) N-(1,3-diméthyl-butyl)-N'-phényl-p-phénylènediamine | | |
| (5) N-cyclohexyl-2-benzothiazyl sulfénamide | | |

Les compositions sont préparées en travaillant thermo-mécaniquement les élastomères dans un malaxeur interne (type BANBURY) d'un volume égal à 1 litre, en deux étapes, avec une vitesse moyenne des palettes de 80 tours/minute, jusqu'à l'obtention d'une température de 160 °C, ces étapes étant suivies d'une étape de finition réalisée sur un mélangeur externe.

La vulcanisation des formulations est adaptée aux cinétiques de vulcanisation des mélanges correspondants.

Les propriétés des compositions sont exposées ci-après, les mesures ayant été effectuées (sur les formulations vulcanisées), comme dans le cas des compositions de l'exemple 6 ci-après, selon les normes et/ou méthodes suivantes :

### Propriétés rhéologiques et de vulcanisation

- Consistance Mooney : norme NF T 43005 (mesure de Mooney Large (1 + 4) à 100 °C, à l'aide d'un viscosimètre Mooney.
- Vulcanisation : norme NF T 43015.

On utilise, notamment pour la mesure du couple mini (Cmin) et du couple maxi (Cmax) un rhéomètre Monsanto 100 S.

Ts2 correspond au temps pendant lequel le contrôle du mélange est possible ; le mélange de caoutchouc durcit à partir de Ts2 (début de la vulcanisation).

T90 correspond au temps au bout duquel 90 % de la vulcanisation ont été réalisés.

### Propriétés mécaniques

- Traction (modules) : norme NF T 46002
   Les modules x % correspondent à la contrainte mesurée à x % de déformation en traction.
- Dureté Shore A : norme ASTM D2240
   La valeur considérée est déterminée 15 secondes après l'application de la force.

### Propriétés dynamiques

- Effet Payne :
Les modules réel (G') et imaginaire (G") ainsi que la tangente de l'angle de perte (tan δ), définie comme le rapport de G" sur G', sont mesurés à différents taux de déformation sur un appareil de spectrométrie mécanique (Viscoanalyseur VA2000 de Metravib RDS).
Les conditions de l'essai sont les suivantes :
Les éprouvettes sont de forme parallélépipèdique (longueur 6 mm, largeur 4 mm, épaisseur 2,5 mm environ). Une déformation sinusoïdale d'amplitude croissante est appliquée à une fréquence constante de 5 Hz. A chaque taux de déformation, G', G" et tan δ sont évalués. Ci-dessous, ΔG' fait référence à la différence entre le module G' mesuré à une déformation en cisaillement de 0,001 et le module G' mesuré à une déformation en cisaillement de 1 et tan δ max correspond au maximum de la tangente de l'angle de perte en fonction de la déformation.
- Dynamique (balayage) température :
Les modules réel (E') et imaginaire (E") ainsi que la tangente de l'angle de perte (tan δ), définie comme le rapport de E" sur E', sont mesurés à différentes températures sur un appareil de spectrométrie mécanique (Viscoanalyseur VA2000 de Metravib RDS).
Les conditions de l'essai sont les suivantes :
Les éprouvettes sont de forme parallélépipèdique (longueur 10 mm, largeur 6 mm, épaisseur 2,5 mm environ). Une déformation sinusoïdale d'une amplitude constante de 10 microns, est appliquée à une fréquence constante de 10 Hz. E', E" et tan δ sont évalués en fonction de la température. La vitesse de balayage en température est de 0.5 °C/min. Ci-dessous, tan δ max (T) correspond au maximum de la tangente de l'angle de perte en fonction de la température.
- Résistance au vieillissement en température et aux UV :
La résistance au vieillissement thermique est évaluée en traction, sur des échantillons ayant séjourné une semaine dans une étuve, à une température de 60 °C.
La résistance au vieillissement UV A est évaluée en traction, sur des échantillons ayant séjourné 100 heures dans un appareil à UV CON ATLAS à une température de 60 °C.
Dans ces deux cas, les résultats sont exprimés en contrainte et déformation à la rupture, et sont normés par rapport à la valeur de la contrainte et de la déformation avant vieillissement.

**Tableau 2**

| | composition R | composition 1 |
|---|---|---|
| Consistance Mooney | 56 | 67 |
| Vulcanisation | | |
| Cmin (ln.lb) | 11,4 | 13 |
| Ts2 (min) | 9 | 7 |
| T90 (min) | 34 | 25 |
| Cmax (ln.lb) | 64 | 68 |
| Mécanique | | |
| Module 100 % (MPa) | 2,2 | 3,5 |
| Module 300 % (MPa) | 12,9 | 13,3 |
| Dynamique (effet Payne) | | |
| ΔG' (MPa) | 1,15 | 0,52 |
| tan δ max | 0,36 | 0,28 |

**Tableau 3**

| Vieillissement | composition R | composition 1 |
|---|---|---|
| Déformation rupture | | |
| initiale | 100 | 100 |
| thermique | 95 | 125 |
| UV | 69 | 103 |
| Contrainte rupture | | |
| initiale | 100 | 100 |
| thermique | 104 | 104 |
| UV | 68 | 84 |

On constate que la composition 1 selon l'invention présente un compromis de propriétés intéressant par rapport à la composition de référence (composition R).

Avec une viscosité Mooney et une cinétique de vulcanisation comparables à celles de la composition de référence, la composition 1 conduit à un renforcement en terme de module plus marqué. On constate avec la composition 1 une nette baisse de l'amplitude de la chute de module (effet Payne), se manifestant également par une baisse du maximum de tangente δ en fonction de la déformation.

La composition 1 offre en outre une résistance au vieillisement thermique et au vieillissement UV supérieure à celle de la composition de référence.

### EXEMPLE 6

On prépare les formulations pour caoutchouc industriel suivantes (tableau 4 : compositions en parties, en poids).

**Tableau 4**

| | composition R | composition 2 | composition 3 |
|---|---|---|---|
| SBR⁽¹⁾ | 100 | 100 | 100 |
| charge SiO₂⁽²⁾ | 50 | 0 | 0 |
| charge HCA2 | 0 | 70 | 0 |
| charge HCA3 | 0 | 0 | 70 |
| silane Si69 ⁽³⁾ | 4 | 4 | 4 |
| diphénylguanidine | 1,45 | 1,45 | 1,45 |
| acide stéarique | 2,5 | 2,5 | 2,5 |
| oxyde de zinc | 2,5 | 2,5 | 2,5 |
| anti-oxydant ⁽⁴⁾ | 1,45 | 1,45 | 1,45 |
| sutfénamide ⁽⁵⁾ | 2 | 2 | 2 |
| soufre | 1 | 1 | 1 |

| | | | |
|---|---|---|---|
| (1) Copolymère styrène butadiène synthétisé en solution (type Buna VSL 5525-0), contenant 27,3 % d'huile | | | |
| (2) Charge formée par une silice précipitée de l'exemple 12 de EP-A-0520862 | | | |
| (3) Agent de couplage charge/caoutchouc (commercialisé par la société Dégussa) | | | |
| (4) N-(1,3-diméthyl-butyl)-N'-phényl-p-phénylènediamine | | | |
| (5) N-cyclohexyl-2-benzothiazyl sulfénamide | | | |

Les compositions sont préparées en travaillant thermo-mécaniquement les élastomères dans un malaxeur interne (type BANBURY) d'un volume égal à 1 litre, en deux étapes, avec une vitesse moyenne des palettes de 80 tours/minute, jusqu'à l'obtention d'une température de 160 °C, ces étapes étant suivies d'une étape de finition réalisée sur un mélangeur externe.

La vulcanisation des formulations est adaptée aux cinétiques de vulcanisation des mélanges correspondants.

Les propriétés des compositions sont exposées ci-après, les mesures ayant été effectuées (sur les formulations vulcanisées) selon les normes et/ou méthodes décrites dans l'exemple 5.

**Tableau 5**

| | composition R | composition 2 | composition 3 |
|---|---|---|---|
| Consistance Mooney | 56 | 50 | 61,5 |
| Vulcanisation | | | |
| Cmin (ln.lb) | 11,4 | 8,6 | 10,4 |
| Ts2 (min) | 9 | 7 | 6,4 |
| T90 (min) | 34 | 27,3 | 29,3 |
| Cmax (ln.lb) | 64 | 65,2 | 66,2 |
| Mécanique | | | |
| Module 10 % (MPa) | 0,41 | 0,34 | 0,39 |
| Module 100 % (MPa) | 2,2 | 2,3 | 3,0 |
| Module 300 % (MPa) | 12,9 | 9,9 | 4,6 |
| Dynamique (Payne) | | | |
| ΔG' (MPa) | 1,15 | 0,67 | 0,68 |
| tan δ max | 0,36 | 0,27 | 0,26 |
| Dynamique Temp. | | | |
| tan δ max (T) | 0,67 | 1,80 | 1,67 |

**Tableau 6**

| Vieillissement | composition R | composition 2 | composition 3 |
|---|---|---|---|
| Déformation rupture | | | |
| initiale | 100 | 100 | 100 |
| thermique | 95 | 87 | 87 |
| UV | 69 | 90 | 90 |

| Contrainte rupture | | | |
|---|---|---|---|
| initiale | 100 | 100 | 100 |
| thermique | 104 | 104 | 105 |
| UV | 68 | 101 | 101 |

De même, on constate que les compositions 2 et 3 selon l'invention présentent un compromis de propriétés intéressant par rapport à la composition de référence (composition R).

Avec une viscosité Mooney et une cinétique de vulcanisation comparables à celles de la composition de référence, la composition 2 et surtout la composition 3 conduisent à un renforcement en terme de module plus marqué à 100 % de déformation. On constate avec les compositions 2 et 3 une nette baisse de l'amplitude de la chute de module (effet Payne), se manifestant également par une baisse du maximum de tangente δ en fonction de la déformation. L'effet Payne et la dissipation d'énergie sont donc inférieurs avec les compositions selon l'invention par rapport à la composition de référence.

De plus, on constate des propriétés dynamiques vers 0 °C tout à fait remarquables avec les compositions 2 et 3. En effet, le maximum de tangente δ (T), qui est positionné à T = 0 °C, est 2 à 3 fois plus élevé avec les compositions 2 et 3 qu'avec la composition de référence.

Les compositions 2 et 3 offrent enfin une résistance au vieillissement thermique et au vieillissement UV comparable voire supérieure à celle de la composition de référence.

## Revendications

1. Utilisation comme charge, dans une composition de caoutchouc, d'au moins un composé consistant en un hydroxycarbonate, un hydroxyoxycarbonate ou un oxycarbonate d'aluminium, amorphe.

2. Utilisation selon la revendication 1, **caractérisée en ce que** ledit hydroxycarbonate, hydroxyoxycarbonate ou oxycarbonate contient au moins 0,01, en particulier au moins 0,04, mole de carbonate par mole d'aluminium.

3. Utilisation selon l'une des revendications 1 et 2, **caractérisée en ce que** ledit hydroxycarbonate, hydroxyoxycarbonate ou oxycarbonate contient au moins 0,1 mole de carbonate par mole d'aluminium.

4. Utilisation selon l'une des revendications 1 à 3, **caractérisée en ce que** les carbonates présents dans l'hydroxycarbonate, l'hydroxyoxycarbonate ou l'oxycarbonate sont à caractère covalent.

5. Utilisation selon l'une des revendications 1 à 4, **caractérisée en ce que** ledit composé possède une surface spécifique BET comprise entre 40 et 150 m²/g.

6. Utilisation selon l'une des revendications 1 à 5, **caractérisée en ce que** ledit composé présente un taux de fines (τ_{f}), après désagglomération aux ultra-sons, d'au moins 80 %, en particulier d'au moins 90 %.

7. Utilisation selon l'une des revendications 1 à 6, **caractérisée en ce que** ledit composé est un hydroxycarbonate d'aluminium amorphe répondant à la formule brute suivante
Al(OH)ₓ(CO₃)_{y}, zH₂O
dans laquelle
0,5 ≤ x ≤ 3
0,01 ≤ y ≤ 0,25
z ≤ 1,5

8. Utilisation selon l'une des revendications 1 à 7, **caractérisée en ce que** ledit composé est tel qu'il reste amorphe après avoir été calciné entre 150 et 700 °C pendant 2 heures.

9. Utilisation selon l'une des revendications 1 à 8, **caractérisée en ce que** ledit composé est tel qu'il reste amorphe après avoir subi un traitement consistant en une déshydratation rapide à l'aide d'un courant de gaz à 600 °C, le temps de contact dudit composé avec ledit gaz étant de 1 à 2 secondes.

10. Utilisation selon l'une des revendications 1 à 6, **caractérisée en ce que** ledit composé est issu de la calcination entre 150 et 700 °C d'un hydroxycarbonate d'aluminium amorphe, en particulier pendant 1 à 3 heures.

11. Utilisation selon la revendication 10, **caractérisée en ce que** ledit hydroxycarbonate d'aluminium amorphe de départ est tel qu'il reste amorphe après avoir subi un traitement consistant en une déshydratation rapide à l'aide d'un courant de gaz à 600 °C, le temps de contact dudit composé avec ledit gaz étant de 1 à 2 secondes.

12. Utilisation selon l'une des revendications 1 à 6, **caractérisée en ce que** ledit composé est issu de la déshydratation rapide d'un hydroxycarbonate d'aluminium amorphe à l'aide d'un courant de gaz à une température comprise entre 500 et 700 °C, en particulier égale à 600 °C, le temps de contact de l'hydroxycarbonate avec ledit gaz étant compris entre une fraction de seconde et 4 secondes, notamment entre 1 et 2 secondes.

13. Utilisation selon la revendication 12, **caractérisée en ce que** ledit hydroxycarbonate d'aluminium amorphe de départ est tel qu'il reste amorphe après avoir été calciné entre 150 et 700 °C pendant 2 heures.

14. Utilisation selon l'une des revendications 10 à 13, **caractérisée en ce que** ledit hydroxycarbonate d'aluminium amorphe de départ contient au moins 0,01, en particulier au moins 0,04, notamment au moins 0,1, mole de carbonate par mole d'aluminium.

15. Utilisation selon l'une des revendications 10 à 14, **caractérisée en ce que** les carbonates présents dans ledit hydroxycarbonate d'aluminium amorphe de départ sont à caractère covalent.

16. Utilisation selon l'une des revendications 10 à 15, **caractérisée en ce que** ledit hydroxycarbonate d'aluminium amorphe de départ possède une surface spécifique BET comprise entre 40 et 150 m²/g.

17. Utilisation selon l'une des revendications 10 à 16, **caractérisée en ce que** ledit hydroxycarbonate d'aluminium amorphe de départ répond à la formule brute suivante
Al(OH)ₓ(CO₃)_{y}, zH₂O
dans laquelle
0,5 ≤ x ≤ 3
0,01 ≤ y ≤ 0,25
z ≤ 1,5

18. Utilisation selon l'une des revendications 1 à 17, **caractérisée en ce que** ladite composition de caoutchouc est à base d'au moins un élastomère, ledit élastomère présentant de préférence une température de transition vitreuse comprise entre -150 et +20 °C.

19. Utilisation selon l'une des revendications 1 à 18, caracérisée en ce que ladite composition de caoutchouc comprend en outre au moins un agent de couplage et/ou au moins un agent de recouvrement.

20. Composition de caoutchouc à base d'au moins un élastomère, comprenant au moins une charge, **caractérisée en ce que** la charge est formée au moins en partie, de préférence en totalité, d'un composé consistant en un hydroxycarbonate, un hydroxyoxycarbonate ou un oxycarbonate d'aluminium, amorphe.

21. Composition selon la revendication 20, **caractérisée en ce que** ledit hydroxycarbonate, hydroxyoxycarbonate ou oxycarbonate contient au moins 0,01, en particulier au moins 0,04, mole de carbonate par mole d'aluminium.

22. Composition selon l'une des revendications 20 et 21, **caractérisée en ce que** ledit hydroxycarbonate, hydroxyoxycarbonate ou oxycarbonate contient au moins 0,1 mole de carbonate par mole d'aluminium.

23. Composition selon l'une des revendications 20 à 22, **caractérisée en ce que** les carbonates présents dans l'hydroxycarbonate, l'hydroxyoxycarbonate ou l'oxycarbonate sont à caractère covalent.

24. Composition selon l'une des revendications 20 à 23, **caractérisée en ce que** ledit composé possède une surface spécifique BET comprise entre 40 et 150 m²/g.

25. Composition selon l'une des revendications 20 à 24, **caractérisée en ce que** ledit composé présente un taux de fines (τ_{f}), après désaggtomération aux ultra-sons, d'au moins 80 %, en particulier d'au moins 90 %.

26. Composition selon l'une des revendications 20 à 25, **caractérisée en ce que** ledit composé est un hydroxycarbonate d'aluminium amorphe répondant à la formule brute suivante
Al(OH)ₓ(CO₃)_{y}, zH₂O
dans laquelle
0,5 ≤ x ≤ 3
0,01 ≤ y ≤ 0,25
z ≤ 1,5

27. Composition selon l'une des revendications 20 à 26, **caractérisée en ce que** ledit composé est tel qu'il reste amorphe après avoir été calciné entre 150 et 700 °C pendant 2 heures.

28. Composition selon l'une des revendications 20 à 27, **caractérisée en ce que** ledit composé est tel qu'il reste amorphe après avoir subi un traitement consistant en une déshydratation rapide à l'aide d'un courant de gaz à 600 °C, le temps de contact dudit composé avec ledit gaz étant de 1 à 2 secondes.

29. Composition selon l'une des revendications 20 à 25, **caractérisée en ce que** ledit composé est issu de la calcination entre 150 et 700 °C d'un hydroxycarbonate d'aluminium amorphe, en particulier pendant 1 à 3 heures.

30. Composition selon la revendication 29, **caractérisée en ce que** ledit hydroxycarbonate d'aluminium amorphe de départ est tel qu'il reste amorphe après avoir subi un traitement consistant en une déshydratation rapide à l'aide d'un courant de gaz à 600 °C, le temps de contact dudit composé avec ledit gaz étant de 1 à 2 secondes.

31. Composition selon l'une des revendications 20 à 25, **caractérisée en ce que** ledit composé est issu de la déshydratation rapide d'un hydroxycarbonate d'aluminium amorphe à l'aide d'un courant de gaz à une température comprise entre 500 et 700 °C, en particulier égale à 600 °C, le temps de contact de l'hydroxycarbonate avec ledit gaz étant compris entre une fraction de seconde et 4 secondes, notamment entre 1 et 2 secondes.

32. Composition selon la revendication 31, **caractérisée en ce que** ledit hydroxycarbonate d'aluminium amorphe de départ est tel qu'il reste amorphe après avoir été calciné entre 150 et 700 °C pendant 2 heures.

33. Composition selon l'une des revendications 29 à 32, **caractérisée en ce que** ledit hydroxycarbonate d'aluminium amorphe de départ contient au moins 0,01, en particulier au moins 0,04, notamment au moins 0,1, mole de carbonate par mole d'aluminium.

34. Composition selon l'une des revendications 29 à 33, **caractérisée en ce que** les carbonates présents dans ledit hydroxycarbonate d'aluminium amorphe de départ sont à caractère covalent.

35. Composition selon l'une des revendications 29 à 34, **caractérisée en ce que** ledit hydroxycarbonate d'aluminium amorphe de départ possède une surface spécifique BET comprise entre 40 et 150 m²/g.

36. Composition selon l'une des revendications 29 à 35, **caractérisée en ce que** ledit hydroxycarbonate d'aluminium amorphe de départ répond à la formule brute suivante
Al(OH)ₓ(CO₃)_{y}, zH₂O
dans laquelle
0,5 ≤ x ≤ 3
0,01 ≤ y ≤ 0,25
z ≤ 1,5

37. Composition selon l'une des revendications 20 à 36, **caractérisée en ce que** ladite composition est à base d'au moins un élastomère présentant une température de transition vitreuse comprise entre -150 et +20 °C.

38. Composition selon l'une des revendications 20 à 37, **caractérisée en ce que** ladite composition de caoutchouc comprend en outre au moins un agent de couplage et/ou au moins un agent de recouvrement.

39. Article fini à base d'au moins une composition telle que définie dans l'une des revendications 20 à 38.

## Patentansprüche

1. Verwendung wenigstens einer Verbindung, bestehend aus einem amorphen Hydroxycarbonat, Hydroxyoxycarbonat oder Oxycarbonat von Aluminium, als Füllstoff in einer Gummizusammensetzung.

2. Verwendung nach Anspruch 1, **dadurch gekennzeichnet, dass** das Hydroxycarbonat, das Hydroxyoxycarbonat oder das Oxycarbonat wenigstens 0,01, insbesondere wenigstens 0,04 mol Carbonat pro mol Aluminium enthält.

3. Verwendung nach einem der Ansprüche 1 und 2, **dadurch gekennzeichnet, dass** das Hydroxycarbonat, das Hydroxyoxycarbonat oder das Oxycarbonat wenigstens 0,1 mol Carbonat pro mol Aluminium enthält.

4. Verwendung nach einem der Ansprüche 1 bis 3, **dadurch gekennzeichnet, dass** die Carbonate, die in dem Hydroxycarbonat, dem Hydroxyoxycarbonat oder dem Oxycarbonat vorliegen, einen kovalenten Charakter aufweisen.

5. Verwendung nach einem der Ansprüche 1 bis 4, **dadurch gekennzeichnet, dass** die Verbindung eine spezifische BET-Oberfläche, die zwischen 40 und 150 m²/g liegt, besitzt.

6. Verwendung nach einem der Ansprüche 1 bis 5, **dadurch gekennzeichnet, dass** die Verbindung nach Desagglomeration mittels Ultraschall einen Anteil an Feinstteilchen (τ_{f}) von wenigstens 80 %, insbesondere wenigstens 90 % aufweist.

7. Verwendung nach einem der Ansprüche 1 bis 6, **dadurch gekennzeichnet, dass** die Verbindung ein amorphes Aluminiumhydroxycarbonat ist, das der folgenden Summenformel entspricht
Al(OH)ₓ(CO₃)_{y}, zH₂O
in welcher
0,5 ≤ x ≤ 3
0,01 ≤ y ≤ 0,25
z ≤ 1,5

8. Verwendung nach einem der Ansprüche 1 bis 7, **dadurch gekennzeichnet, dass** die Verbindung derart ist, dass diese amorph bleibt, nachdem sie für 2 Stunden zwischen 150 und 700°C calciniert wurde.

9. Verwendung nach einem der Ansprüche 1 bis 8, **dadurch gekennzeichnet, dass** die Verbindung derart ist, dass diese amorph bleibt, nachdem sie einer Behandlung unterzogen wurde, die aus einer schnellen Dehydratisierung mit Hilfe eines Gasstroms bei 600°C bestand, wobei die Kontaktdauer der Verbindung mit dem Gas 1 bis 2 Sekunden betrug.

10. Verwendung nach einem der Ansprüche 1 bis 6, **dadurch gekennzeichnet, dass** die Verbindung aus der Calcinierung zwischen 150 und 700°C eines amorphen Aluminiumhydroxycarbonats, insbesondere für 1 bis 3 Stunden, stammt.

11. Verwendung nach Anspruch 10, **dadurch gekennzeichnet, dass** das amorphe Aluminiumhydroxycarbonat zu Beginn derart ist, dass es amorph bleibt, nachdem es einer Behandlung unterzogen wurde, welche aus einer schnellen Dehydratisierung mit Hilfe eines Gasstroms bei 600°C bestand, wobei die Kontaktdauer der Verbindung mit dem Gas 1 bis 2 Sekunden betrug.

12. Verwendung nach einem der Ansprüche 1 bis 6, **dadurch gekennzeichnet, dass** die Verbindung aus der schnellen Dehydratisierung eines amorphen Aluminiumhydroxycarbonats mit Hilfe eines Gasstroms bei einer Temperatur, die zwischen 500 und 700°C liegt und insbesondere gleich 600°C ist, stammt, wobei die Kontaktdauer des Hydroxycarbonats mit dem Gas zwischen einem Bruchteil einer Sekunde bis zu 4 Sekunden, insbesondere zwischen 1 und 2 Sekunden lag.

13. Verwendung nach Anspruch 12, **dadurch gekennzeichnet, dass** das amorphe Aluminiumhydroxycarbonat zu Beginn derart ist, dass es amorph bleibt, nachdem es für 2 Stunden zwischen 150 und 700°C calciniert wurde.

14. Verwendung nach einem der Ansprüche 10 bis 13, **dadurch gekennzeichnet, dass** das amorphe Aluminiumhydroxycarbonat zu Beginn wenigstens 0,01, insbesondere wenigstens 0,04, besonders bevorzugt wenigstens 0,1 mol Carbonat pro mol Aluminium enthält.

15. Verwendung nach einem der Ansprüche 10 bis 14, **dadurch gekennzeichnet, dass** die Carbonate, die zu Beginn in dem amorphen Aluminiumhydroxycarbonat vorliegen, einen kovalenten Charakter aufweisen.

16. Verwendung nach einem der Ansprüche 10 bis 15, **dadurch gekennzeichnet, dass** das amorphe Aluminiumhydroxycarbonat zu Beginn eine spezifische BET-Oberfläche besitzt, die zwischen 40 und 150 m²/g liegt.

17. Verwendung nach einem der Ansprüche 10 bis 16, **dadurch gekennzeichnet, dass** das amorphe Aluminiumhydroxycarbonat zu Beginn der folgenden Summenformel entspricht
Al(OH)ₓ(CO₃)_{y}, zH₂O
in welcher
0,5 ≤ x ≤ 3
0,01 ≤ y ≤ 0,25
z ≤ 1,5

18. Verwendung nach einem der Ansprüche 1 bis 17, **dadurch gekennzeichnet, dass** die Gummizusammensetzung auf wenigstens einem Elastomer basiert, wobei das Elastomer vorzugsweise eine Glasübergangstemperatur aufweist, die zwischen -150 und +20°C liegt.

19. Verwendung nach einem der Ansprüche 1 bis 18, **dadurch gekennzeichnet, dass** die Gummizusammensetzung weiterhin wenigstens einen Haftvermittler und/oder wenigstens ein Deckmittel umfasst.

20. Gummizusammensetzung auf der Basis wenigstens eines Elastomers, welche wenigstens einen Füllstoff umfasst, **dadurch gekennzeichnet, dass** der Füllstoff wenigstens teilweise, vorzugsweise ganz, aus einer Verbindung gebildet wird, die aus einem amorphen Hydroxycarbonat, Hydroxyoxycarbonat oder Oxycarbonat von Aluminium besteht.

21. Zusammensetzung nach Anspruch 20, **dadurch gekennzeichnet, dass** das Hydroxycarbonat, das Hydroxyoxycarbonat oder das Oxycarbonat wenigstens 0,01, insbesondere wenigstens 0,04 mol Carbonat pro mol Aluminium enthält.

22. Zusammensetzung nach einem der Ansprüche 20 und 21, **dadurch gekennzeichnet, dass** das Hydroxycarbonat, das Hydroxyoxycarbonat oder das Oxycarbonat wenigstens 0,1 mol Carbonat pro mol Aluminium enthält.

23. Zusammensetzung nach einem der Ansprüche 20 bis 22, **dadurch gekennzeichnet, dass** die Carbonate, die in dem Hydroxycarbonat, dem Hydroxyoxycarbonat oder dem Oxycarbonat vorliegen, einen kovalenten Charakter aufweisen.

24. Zusammensetzung nach einem der Ansprüche 20 bis 23, **dadurch gekennzeichnet, dass** die Verbindung eine spezifische BET-Oberfläche besitzt, die zwischen 40 und 150 m²/g liegt.

25. Zusammensetzung nach einem der Ansprüche 20 bis 24, **dadurch gekennzeichnet, dass** die Verbindung nach Desagglomeration mittels Ultraschall einen Anteil an Feinstteilchen (τ_{f}) von wenigstens 80 %, insbesondere wenigstens 90 % aufweist.

26. Zusammensetzung nach einem der Ansprüche 20 bis 25, **dadurch gekennzeichnet, dass** die Verbindung ein amorphes Aluminiumhydroxycarbonat ist, welches der folgenden Summenformel entspricht
Al(OH)ₓ(CO₃)_{y}, zH₂O
in welcher
0,5 ≤ x ≤ 3
0,01 ≤ y ≤ 0,25
z ≤ 1,5

27. Zusammensetzung nach einem der Ansprüche 20 bis 26, **dadurch gekennzeichnet, dass** die Verbindung derart ist, dass sie amorph bleibt, nachdem sie für 2 Stunden zwischen 150 und 700°C calciniert wurde.

28. Zusammensetzung nach einem der Ansprüche 20 bis 27, **dadurch gekennzeichnet, dass** die Verbindung derart ist, dass sie amorph bleibt, nachdem sie einer Behandlung unterzogen wurde, welche aus einer schnellen Dehydratisierung mit Hilfe eines Gasstroms bei 600°C bestand, wobei die Kontaktdauer der Verbindung mit dem Gas 1 bis 2 Sekunden betrug.

29. Zusammensetzung nach einem der Ansprüche 20 bis 25, **dadurch gekennzeichnet, dass** die Verbindung aus der Calcinierung zwischen 150 und 700°C eines amorphen Aluminiumhydroxycarbonats, insbesondere für 1 bis 3 Stunden, stammt.

30. Zusammensetzung nach Anspruch 29, **dadurch gekennzeichnet, dass** das amorphe Aluminiumhydroxycarbonat zu Beginn derart ist, dass es amorph bleibt, nachdem es einer Behandlung unterzogen wurde, welche aus einer schnellen Dehydratisierung mit Hilfe eines Gasstroms bei 600°C bestand, wobei die Kontaktdauer der Verbindung mit dem Gas 1 bis 2 Sekunden betrug.

31. Zusammensetzung nach einem der Ansprüche 20 bis 25, **dadurch gekennzeichnet, dass** die Verbindung aus der schnellen Dehydratisierung eines amorphen Aluminiumhydroxycarbonats mit Hilfe eines Gasstroms bei einer Temperatur, die zwischen 500 und 700°C liegt und insbesondere gleich 600°C ist, stammt, wobei die Kontaktdauer des Hydroxycarbonats mit dem Gas zwischen einem Bruchteil einer Sekunde und 4 Sekunden, insbesondere zwischen 1 und 2 Sekunden lag.

32. Zusammensetzung nach Anspruch 31, **dadurch gekennzeichnet, dass** das amorphe Aluminiumhydroxycarbonat zu Beginn derart ist, dass es amorph bleibt, wenn es für 2 Stunden zwischen 150 und 700°C calciniert wurde.

33. Zusammensetzung nach einem der Ansprüche 29 bis 32, **dadurch gekennzeichnet, dass** das amorphe Aluminiumhydroxycarbonat zu Beginn wenigstens 0,01, insbesondere wenigstens 0,04, besonders bevorzugt wenigstens 0,1 mol Carbonat pro mol Aluminium enthält.

34. Zusammensetzung nach einem der Ansprüche 29 bis 33, **dadurch gekennzeichnet, dass** die Carbonate, die zu Beginn in dem amorphen Aluminiumhydroxycarbonat vorliegen, einen kovalenten Charakter aufweisen.

35. Zusammensetzung nach einem der Ansprüche 29 bis 34, **dadurch gekennzeichnet, dass** das amorphe Aluminiumhydroxycarbonat zu Beginn eine spezifische BET-Oberfiäche besitzt, die zwischen 40 und 150 m²/g liegt.

36. Zusammensetzung nach einem der Ansprüche 29 bis 35, **dadurch gekennzeichnet, dass** das amorphe Aluminiumhydroxycarbonat zu Beginn der folgenden Summenformel entspricht
Al(OH)ₓ(CO₃)_{y}, zH₂O
in welcher
0,5 ≤ x ≤ 3
0,01 ≤ y ≤ 0,25
z ≤ 1,5

37. Zusammensetzung nach einem der Ansprüche 20 bis 36, **dadurch gekennzeichnet, dass** die Zusammensetzung auf wenigstens einem Elastomer basiert, das eine Glasübergangstemperatur aufweist, die zwischen -150 und +20°C liegt.

38. Zusammensetzung nach einem der Ansprüche 20 bis 37, **dadurch gekennzeichnet, dass** die Gummizusammensetzung weiterhin wenigstens einen Haftvermittler und/oder wenigstens ein Deckmittel umfasst.

39. Fertiger Gegenstand auf der Basis wenigstens einer Zusammensetzung wie sie in einem der Ansprüche 20 bis 38 definiert ist.

## Claims

1. Use as a filler, in a rubber composition, of at least one compound consisting of an aluminium hydroxycarbonate, hydroxyoxycarbonate, or oxycarbonate.

2. Use according to Claim 1, **characterised in that** said hydroxycarbonate, hydroxyoxycarbonate or oxycarbonate contains at least 0.01, in particular at least 0.04, moles of carbonate per mole of aluminium.

3. Use according to one of Claims 1 and 2, **characterised in that** said hydroxycarbonate, hydroxyoxycarbonate or oxycarbonate contains at least 0.1 mole of carbonate per mole of aluminium.

4. Use according to one of Claims 1 to 3, **characterised in that** the carbonates present in the hydroxycarbonate, hydroxyoxycarbonate or oxycarbonate are of covalent type.

5. Use according to one of Claims 1 to 4, **characterised in that** said compound has a BET specific surface area of between 40 and 150 m²/g.

6. Use according to one of Claims 1 to 5, **characterised in that** said compound has a fines rate (τ_{f}) following ultrasonic disagglomeration of at least 80%, in particular of at least 90%.

7. Use according to one of Claims 1 to 6, **characterised in that** said compound is an amorphous aluminium hydroxycarbonate corresponding to the following common formula:
Al(OH)ₓ(CO₃)_{y}, zH₂O
wherein
0.5 ≤ x ≤ 3
0.01 ≤ y ≤ 0.25
z ≤ 1.5

8. Use according to one of Claims 1 to 7, **characterised in that** said compound is such that it remains amorphous after having been calcined at between 150 and 700°C for 2 hours.

9. Use according to one of Claims 1 to 8, **characterised in that** said compound is such that it remains amorphous after having been subjected to a treatment consisting in rapid dehydration by means of a gas flow at 600°C, the contact time of said compound with said gas being between 1 and 2 seconds.

10. Use according to one of Claims 1 to 6, **characterised in that** said compound is the result of the calcination at between 150 and 700°C of an amorphous aluminium hydroxycarbonate, in particular for between 1 and 3 hours.

11. Use according to Claim 10, **characterised in that** said initial amorphous aluminium hydroxycarbonate is such that it remains amorphous after having been subjected to a treatment consisting in rapid dehydration by means of a gas flow at 600°C, the contact time of said compound with said gas being between 1 and 2 seconds.

12. Use according to one of Claims 1 to 6, **characterised in that** said compound is the result of rapid dehydration of an amorphous aluminium hydroxycarbonate by means of a gas flow at a temperature of between 500 and 700°C, in particular of 600°C, the contact time of the hydroxycarbonate with said gas being between a fraction of a second and 4 seconds, in particular between 1 and 2 seconds.

13. Use according to Claim 12, **characterised in that** said initial amorphous aluminium hydroxycarbonate is such that it remains amorphous after having been calcined at between 150 and 700°C for 2 hours.

14. Use according to one of Claims 10 to 13, **characterised in that** said initial amorphous aluminium hydroxycarbonate contains at least 0.01, in particular at least 0.04, and most particularly at least 0.1 mole of carbonate per mole of aluminium.

15. Use according to one of Claims 10 to 14, **characterised in that** the carbonates present in said initial amorphous aluminium hydroxycarbonate are of covalent type.

16. Use according to one of Claims 10 to 15, **characterised in that** said initial amorphous aluminium hydroxycarbonate has a BET specific surface area of between 40 and 150 m²/g.

17. Use according to one of Claims 10 to 16, **characterised in that** said initial amorphous aluminium hydroxycarbonate corresponds to the following common formula:
Al(OH)ₓ(CO₃)_{y}, zH₂O
wherein
0.5 ≤ x ≤ 3
0.01 ≤ y ≤ 0.25
z ≤ 1.5

18. Use according to one of Claims 1 to 17, **characterised in that** said rubber composition is based on at least one elastomer, said elastomer preferably having a vitreous transition temperature of between -150 and +20°C.

19. Use according to one of Claims 1 to 18, **characterised in that** said rubber composition further comprises at least one coupling agent and/or at least one coating agent.

20. A rubber composition based on at least one elastomer, comprising at least one filler, **characterised in that** the filler is formed at least in part, preferably in toto, by a compound consisting of an amorphous aluminium hydroxycarbonate, hydroxyoxycarbonate or oxycarboriate.

21. A composition according to Claim 20, **characterised in that** said hydroxycarbonate, hydroxyoxycarbonate or oxycarbonate contains at least 0.01, in particular at least 0.04, moles of carbonate per mole of aluminium.

22. A composition according to one of Claims 20 and 21, **characterised in that** said hydroxycarbonate, hydroxyoxycarbonate or oxycarbonate contains at least 0.1 mole of carbonate per mole of aluminium.

23. A composition according to one of Claims 20 to 22, **characterised in that** the carbonates present in the hydroxycarbonate, the hydroxyoxycarbonate or the oxycarbonate are of covalent type.

24. A composition according to one of Claims 20 to 23, **characterised in that** said compound has a BET specific surface area of between 40 and 150 m²/g.

25. A composition according to one of Claims 20 to 24, **characterised in that** said compound has a fines rate (τ_{f}) following ultrasonic disagglomeration of at least 80%, in particular of at least 90%.

26. A composition according to one of Claims 20 to 25, **characterised in that** said compound is an amorphous aluminium hydroxcarbonate corresponding to the following common formula:
Al(OH)ₓ(CO₃)_{y}, zH₂O
wherein
0.5 ≤ x ≤ 3
0.01 ≤ y ≤ 0.25
z ≤ 1.5

27. A composition according to one of Claims 20 to 26, **characterised in that** said compound is such that it remains amorphous after having been calcined at between 150 and 700°C for 2 hours.

28. A composition according to one of Claims 20 to 27, **characterised in that** said compound is such that it remains amorphous after having been subjected to a treatment consisting in rapid dehydration in a gas flow at 600°C, the contact time of said compound with said gas being between 1 and 2 seconds.

29. A composition according to one of Claims 20 to 25, **characterised in that** said compound is the result of the calcination at between 150 and 700°C of an amorphous aluminium hydroxycarbonate, in particular for between 1 and 3 hours.

30. A composition according to Claim 29, **characterised in that** said initial amorphous aluminium hydroxycarbonate is such that it remains amorphous after having been subjected to a treatment consisting in rapid dehydration by means of a gas flow at 600°C, the contact time of said compound with said gas being between 1 and 2 seconds.

31. A composition according to one of Claims 20 to 25, **characterised in that** said compound is the result of the rapid dehydration of an amorphous aluminium hydroxycarbonate by means of a gas flow at a temperature of between 500 and 700°C, in particular of 600°C, the contact time of the hydroxycarbonate with said gas being between a fraction of a second and 4 seconds, in particular between 1 and 2 seconds.

32. A composition according to Claim 31, **characterised in that** said initial amorphous aluminium hydroxycarbonate is such that it remains amorphous after having been calcined at between 150 and 700°C for 2 hours.

33. A composition according to one of Claims 29 to 32, **characterised in that** said initial amorphous aluminium hydroxycarbonate contains at least 0.01, in particular at least 0.04, most particularly at least 0.1 mole of carbonate per mole of aluminium.

34. A composition according to one of Claims 29 to 33, **characterised in that** the carbonates present in said initial amorphous aluminium hydroxycarbonate are of covalent type.

35. A composition according to one of Claims 29 to 34, **characterised in that** said initial amorphous aluminium hydroxcarbonate has a BET specific surface area of between 40 and 150 m²/g.

36. A composition according to one of Claims 29 to 35, **characterised in that** said initial amorphous aluminium hydroxycarbonate corresponds to the following common formula:
Al(OH)ₓ(CO₃)_{y}, zH₂O
wherein
0.5 ≤ x ≤ 3
0.01 ≤ y ≤ 0.25
z ≤ 1.5

37. A composition according to one of Claims 20 to 36, **characterised in that** said composition is based on at least one elastomer having a vitreous transition temperature of between -150 and +20°C.

38. A composition according to one of Claims 20 to 37, **characterised in that** said rubber composition further comprises at least one coupling agent and/or at least one coating agent.

39. A finished article based on at least one composition such as defined in one of Claims 20 to 38.
